# EUROPÄISCHE PATENTSCHRIFT

(11) **EP 3 466 800 B1**
(45) Veröffentlichungstag und Bekanntmachung des Hinweises auf die Patenterteilung: **13.03.2024**
(21) Anmeldenummer: 17195294.8
(22) Anmeldetag: 06.10.2017
(51) Int. Cl.: B62D 25/00, B62D 29/00

(54) **VERSTÄRKUNGSVORRICHTUNG ZUR VERSTÄRKUNG EINES STRUKTURELEMENTES IN EINEM KRAFTFAHRZEUG**
REINFORCING DEVICE FOR REINFORCING A STRUCTURAL ELEMENT IN A MOTOR VEHICLE
DISPOSITIF DE RENFORT PERMETTANT DE RENFORCER UN ÉLÉMENT STRUCTURAL DANS UN VÉHICULE AUTOMOBILE

(43) Veröffentlichungstag der Anmeldung: 10.04.2019
(73) Patentinhaber: SIKA TECHNOLOGY AG, 6340 Baar (CH)
(72) Erfinder: Niggemann, Stephan, 8967 Widen (CH); Brichet, Nicolas, 8055 Zürich (CH); Schneuwly, Roman, 8965 Berikon (CH)
(74) Vertreter: Sika Patent Attorneys

(56) Entgegenhaltungen:
- WO-A1-03/020574
- DE-A1-102005 043 698
- DE-A1-102014 203 722
- JP-A- 2006 282 099
- US-A1- 2001 039 780
- US-B1- 6 247 287

## Beschreibung

Die Erfindung betrifft eine Verstärkungsvorrichtung zur Verstärkung eines Strukturelementes in einem Kraftfahrzeug, ein System eines verstärkten Strukturelementes eines Kraftfahrzeugs, sowie ein Verfahren zur Verstärkung eines Strukturelementes in einem Kraftfahrzeug.

Vielfach weisen Bauelemente, wie beispielsweise Karosserien und/oder Rahmen von Fortbewegungsmitteln, insbesondere von Kraftfahrzeugen, Strukturen mit Hohlräumen auf, um leichtgewichtige Konstruktionen zu ermöglichen. Oft ist es dabei wünschenswert, diese Hohlräume und somit das Bauelement wesentlich zu verstärken, jedoch das geringe Gewicht beizubehalten.

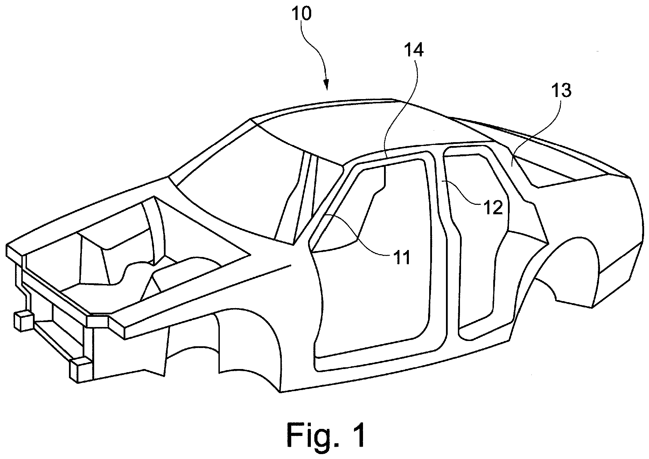

Insbesondere im Automobilbau, aber auch im Flugzeug- und Bootsbau, werden deshalb Verstärkungselemente (englisch: reinforcer) verwendet, um Hohlräume zu verstärken. In Fig. 1 ist eine Karosserie eines Automobils schematisch dargestellt. Die Karosserie 10 weist dabei verschiedene Strukturen mit Hohlräumen auf, wie beispielsweise die A-Säule 11, die B-Säule 12, die C-Säule 13 und den Dachrahmen 14.

Solche und andere Hohlräume bzw. Strukturen in Karosserien von Kraftfahrzeugen werden üblicherweise mit Verstärkungselementen verstärkt, welche einen schäumbaren Klebstoff zur Verklebung des Verstärkungselementes im Strukturbauteil haben. Nachteilig an solchen bekannten Lösungen ist es, dass für Bereiche mit besonders hohen Anforderungen hinsichtlich einer verstärkten Struktur, wie beispielsweise Bereiche der A-Säule oder des Dachrahmens, mit solchen bekannten Lösungen eine dadurch erzielbare Verstärkungswirkung nicht ausreichend ist. Insbesondere für Bauteile, welche wichtige Funktionen bei sehr hohen Lastfällen, wie sie bei Unfällen auftreten, übernehmen, ist eine möglichst hohe mechanische Verstärkungswirkung wünschenswert. Ein weiteres Beispiel für ein Verstärkungselement mit den Merkmalen des Oberbegriffs von Anspruch 1, wird gezeigt in der US 6 247 287 B1.

Es ist daher eine Aufgabe dieser Erfindung, ein verbessertes System zur Verstärkung von Strukturelementen in Kraftfahrzeugen zur Verfügung zu stellen, welches einerseits weiterhin leichte Konstruktionen erlaubt, und andererseits sehr hohen Ansprüchen an eine mechanische Verstärkung des Strukturelementes genügt.

Diese Aufgabe wird zunächst gelöst durch eine Verstärkungsvorrichtung zur Verstärkung eines Strukturelementes in einem Kraftfahrzeug, wobei die Verstärkungsvorrichtung umfasst: einen Träger mit einer ersten Oberfläche zur Ausrichtung gegen eine erste Wand des Strukturelementes und einer zweiten Oberfläche zur Ausrichtung gegen eine zweite Wand des Strukturelementes; ein Verstärkungselement zur Anordnung zwischen dem Träger und der ersten Wand des Strukturelementes; und einen Klebstoff zur Verbindung des Trägers mit dem Verstärkungselement und des Trägers und des Verstärkungselementes mit dem Strukturelement.

Die eingangs gestellte Aufgabe wird in einem weiteren Aspekt gelöst durch ein System eines verstärkten Strukturelementes in einem Kraftfahrzeug, wobei das System umfasst: ein Strukturelement mit zumindest einer ersten Wand und einer zweiten Wand; eine im Strukturelement angeordnete Verstärkungsvorrichtung umfassend: einen Träger mit einer ersten Oberfläche und einer zweiten Oberfläche, wobei die erste Oberfläche gegen die erste Wand des Strukturelementes gerichtet ist und wobei die zweite Oberfläche gegen die zweite Wand des Strukturelementes gerichtet ist; ein Verstärkungselement, welches zwischen dem Träger und der ersten Wand des Strukturelementes angeordnet ist; und einen Klebstoff, welcher den Träger mit dem Verstärkungselement verbindet und welcher den Träger und das Verstärkungselement mit dem Strukturelement verbindet.

Die eingangs gestellte Aufgabe wird in einem weiteren Aspekt zudem gelöst durch ein Verfahren zur Verstärkung eines Strukturelementes in einem Kraftfahrzeug, wobei das Verfahren die Schritte umfasst: Bereitstellen eines Trägers mit einer ersten Oberfläche und einer zweiten Oberfläche; Bereitstellen eines Verstärkungselementes; Anordnen des Trägers und des Verstärkungselementes im Strukturelement, so dass die erste Oberfläche gegen eine erste Wand des Strukturelementes gerichtet ist und die zweite Oberfläche gegen eine zweite Wand des Strukturelementes gerichtet ist, und so dass das Verstärkungselement zwischen dem Träger und der ersten Wand des Strukturelementes angeordnet ist; und Verbinden des Trägers mit dem Verstärkungselement und des Verstärkungselementes mit dem Strukturelement mit Klebstoff.

Diese Lösung hat den Vorteil, dass dadurch markant verbesserte mechanische Verstärkungseigenschaften erzielt werden können, als dies mit herkömmlichen Verstärkungslösungen der Fall war, wie beispielsweise Trägern ohne zusätzliche Verstärkungselemente oder Verstärkungselemente ohne zusätzliche Träger. Insbesondere im Bereich von Knotenpunkten einer Karosserie, wie diese beispielsweise an oberen und unteren Enden von A-Säulen, B-Säulen oder C-Säulen auftreten, werden sehr hohe Anforderungen an mechanische Eigenschaften gestellt. Es ist daher von Bedeutung, solch kritische Stellen in Karosserien mit besonders starken Systemen verstärken zu können, so dass diese in einem Lastfall, wie er beispielsweise bei Unfällen auftritt, den hohen Belastungen standhalten können.

Ein Kerngedanke der vorliegenden Erfindung besteht darin, dass die hier vorgeschlagene Verstärkungsvorrichtung bestehend aus einem Träger und einem Verstärkungselement, welche mit Klebstoff miteinander und mit dem Strukturelement verbunden sind, die Vorteile von bekannten Lösungen mit nur einem Träger oder nur einem Verstärkungselement auf ideale Art und Weise kombiniert. Einerseits werden dadurch mechanische Eigenschaften markant verbessert, und andererseits erlaubt die hier vorgeschlagene Lösung eine einfache und kostengünstige Handhabung dieses mehrteiligen Systems.

Der Ausdruck "erste Oberfläche des Trägers" bzw. "zweite Oberfläche des Trägers" bedeutet im Zusammenhang dieser Erfindung eine funktionale Oberflächeneinheit des Trägers, wie beispielsweise eine Seite eines Quaders, welche im Wesentlichen als Einheit wahrgenommen werden kann. Dabei kann eine solche Oberfläche eine zusammenhängende oder aber auch nicht zusammenhängende Oberfläche sein. Beispielsweise kann sich die Oberfläche aus mehreren kleineren Oberflächen zusammensetzen, insbesondere in der Art eines Schachbrett-Musters. Weiterhin kann die Oberfläche in einer Ebene liegen oder aber uneben ausgebildet sein.

In einer beispielhaften Ausführungsform ist ein erster Klebstoff auf der ersten Oberfläche des Trägers und/oder auf dem Verstärkungselement angeordnet.

In einer beispielhaften Ausführungsform ist ein zweiter Klebstoff auf der zweiten Oberfläche des Trägers angeordnet.

In einer beispielhaften Ausführungsform ist ein dritter Klebstoff auf dem Verstärkungselement angeordnet.

Das Anordnen von Klebstoffen auf dem Träger bzw. auf dem Verstärkungselement hat den Vorteil, dass dadurch der Klebstoff zusammen mit dem Träger und dem Verstärkungselement in das Strukturelement eingebracht werden kann. Somit ist es nicht notwendig, den Klebstoff separat in einen Zwischenraum zwischen Träger und Verstärkungselement bzw. zwischen Träger und Strukturelement bzw. zwischen Verstärkungselement und Strukturelement einzubringen. Dies erleichtert eine Anwendung des hier vorgeschlagenen Systems erheblich.

In einer alternativen Ausführungsform wird der Klebstoff in die Zwischenräume zwischen Träger, Verstärkungselement und Strukturelement eingebracht, nachdem der Träger und das Verstärkungselement im Strukturelement angeordnet sind.

Erfindungsgemäss hat der Träger ein erstes Verbindungselement und hat das Verstärkungselement ein zweites Verbindungselement, wobei Träger und Verstärkungselement durch die Verbindungselemente miteinander verbindbar sind.

Erfindungsgemäss sind Träger und Verstärkungselement durch die Verbindungselemente mechanisch miteinander verbindbar.

Beispielsweise kann das erste Verbindungselement als Clip ausgebildet sein und das zweite Verbindungselement kann als Gegenstück ausgebildet sein, so dass Träger und Verstärkungselement aneinandergeclipt werden können.

In einer beispielhaften Ausführungsform ist das erste Verbindungselement als Doppelclip ausgebildet, wobei ein erster Clip mit dem zweiten Verbindungselement des Verstärkungselementes verbindbar ist, und wobei ein zweiter Clip mit einer Wand des Strukturelementes verbindbar ist.

Dabei können beispielsweise das Verstärkungselement und die Wand des Strukturelementes jeweils mit einem Loch ausgeführt sein, durch welches der erste Clip bzw. der zweite Clip hindurchgeführt und befestigt werden können.

Dies hat den Vorteil, dass dadurch mit einem Element sowohl Träger und Verstärkungselement miteinander verbindbar sind, als auch die Kombination von Träger und Verstärkungselement mit dem Strukturelement.

In einer beispielhaften Ausführungsform haben sowohl Träger als auch Verstärkungselement jeweils mehrere Verbindungselemente, so dass der Träger und das Verstärkungselement an mehreren Orten miteinander verbindbar ausgestaltet sind. Insbesondere können sowohl der Träger als auch das Verstärkungselement jeweils zwei, drei, vier, fünf oder sechs Verbindungselemente aufweisen.

In einer alternativen Ausführungsform sind der Träger und das Verstärkungselement durch die Verbindungselemente magnetisch miteinander verbindbar. In einer weiteren alternativen Ausführungsform sind der Träger und das Verstärkungselement durch die Verbindungselemente durch weitere Klebstoffe miteinander verbindbar.

Der Vorteil von solchen Verbindungselementen an Träger und Verstärkungselement besteht darin, dass dadurch der Träger mit dem Verstärkungselement vorfixierbar ausgebildet ist, so dass Träger und Verstärkungselement zunächst miteinander verbunden werden können, um dann gemeinsam in das Strukturelement eingeführt werden zu können. Dies vereinfacht eine Handhabung des hier vorgeschlagenen Systems wesentlich. Zudem kann dadurch gewährleistet werden, dass der Träger und das Verstärkungselement in vorgesehener Art und Weise relativ zueinander positioniert werden im Strukturelement.

In einer beispielhaften Ausführungsform umfasst der Träger und/oder das Verstärkungselement einen oder mehrere Distanzhalter.

In einer beispielhaften Weiterbildung ist der Distanzhalter als Pin oder als Ausbuchtung oder als Stab oder als Auswölbung ausgebildet.

Der Vorteil von solchen Distanzhaltern kann darin gesehen werden, dass dadurch wiederum eine Positionierung des Trägers relativ zum Verstärkungselement vordefiniert werden kann.

Insbesondere können Verbindungselemente und Distanzhalter miteinander kombiniert werden, um eine möglichst einfach zu handhabende, kostengünstige und sichere Vorfixierung des Trägers relativ zum Verstärkungselement zu gewährleisten.

Erfindungsgemäss hat das Verstärkungselement zumindest eine Aussparung.

Erfindungsgemäss beträgt die zumindest eine Aussparung zwischen 10% und 50% einer Gesamtfläche des Verstärkungselementes, besonders bevorzugt zwischen 15 und 45%, besonders bevorzugt zwischen 20 und 40%.

Das Vorsehen von solchen Aussparungen im Verstärkungselement hat den Vorteil, dass dadurch der Klebstoff durch diese Aussparungen fliessen kann. So kann erfindungsgemäss ein Klebstoff, welcher zwischen Träger und Verstärkungselement angeordnet ist, durch eine Fliessbewegung und/oder eine Ausdehnungsbewegung sowohl den Träger mit dem Verstärkungselement verbinden, als auch den Träger und das Verstärkungselement mit einer Wand des Strukturelementes. Daher erlauben solche Aussparungen auch Ausführungsformen, bei welchen Klebstoff lediglich am Träger, nicht aber am Verstärkungselement angeordnet ist. Durch eine Fliessbewegung durch die Aussparungen im Verstärkungselement ist eine zuverlässige Verklebung des Gesamtsystems dennoch gewährleistet.

Dabei hat sich gezeigt, dass die Aussparungen ungefähr einen Drittel der Gesamtfläche des Verstärkungselementes betragen sollen, um eine möglichst optimale Verteilung des Klebstoffes zu erreichen, und gleichzeitig mechanische Eigenschaften des Verstärkungselementes nicht zu stark zu reduzieren.

In einer beispielhaften Ausführungsform umfasst das Verstärkungselement Metall (insbesondere Stahl, Aluminium oder Magnesium), Kunststoff, faserverstärkten Kunststoff (insbesondere karbonfaserverstärkten Kunststoff oder glasfaserverstärkten Kunststoff), oder Kombinationen davon.

Dies hat den Vorteil, dass dadurch leichte Verstärkungselemente realisierbar sind, welche den mechanischen Anforderungen für diese Anwendung genügen.

In einer beispielhaften Ausführungsform ist der Träger zumindest teilweise aus Kunststoff, faserverstärktem Kunststoff, Aluminium oder Magnesium aufgebaut.

In einer beispielhaften Weiterbildung ist der Träger zumindest teilweise aus glasfaserverstärktem Kunststoff oder aus karbonfaserverstärktem Kunststoff aufgebaut. Dabei können beispielsweise Endlosfasern, Kurzfasern oder Langfasern eingesetzt werden.

In einer beispielhaften Weiterbildung ist der Träger zumindest teilweise aus Polyamid, insbesondere aus PA6 oder aus PA6.6, aufgebaut.

In einer beispielhaften Ausführungsform hat das Verstärkungselement zumindest eine Lasche zur Befestigung des Verstärkungselementes am Strukturelement. In einer beispielhaften Weiterbildung ist die zumindest eine Lasche als Schweisslasche ausgebildet. In einer beispielhaften Weiterbildung ist die zumindest eine Lasche und das Verstärkungselement aus Metall ausgebildet, insbesondere aus Stahl.

Das Vorsehen einer oder mehrerer solcher Laschen hat den Vorteil, dass dadurch das Verstärkungselement und der daran befestigte Träger im Strukturelement vorfixiert werden können, solange der Träger und das Verstärkungselement nicht durch den Klebstoff mit dem Strukturelement verbunden sind.

In einer beispielhaften Ausführungsform hat der Träger Rippen zur Verstärkung.

Das Vorsehen von solchen Rippen am Träger hat den Vorteil, dass dadurch Träger realisierbar sind, welche eine höhere mechanische Belastbarkeit bei gleichzeitig geringem Gewicht aufweisen, als dies mit Trägern ohne Rippen der Fall wäre.

In einer beispielhaften Ausführungsform umfasst der Klebstoff einen nicht expandierbaren Klebstoff.

Im Zusammenhang dieser Erfindung bedeutet der Ausdruck "nicht expandierbar" ein Verhalten eines Materials, bei dem das Volumen des Materials sich um nicht mehr als 10% verändert. Somit werden Materialien, wie beispielsweise Klebstoffe, welche sich beispielsweise beim Aushärten leicht ausdehnen oder zusammenziehen, auch als "nicht expandierbare Materialien" verstanden.

Als "Expansionsrate" wird im Zusammenhang dieser Erfindung das Volumen verstanden, welches bei einer Expansion relativ zum bestehenden Volumen hinzukommt. Somit bedeutet eine Expansionsrate von 100% eine Verdoppelung des Volumens bei der Expansion.

Als nicht expandierbare Klebstoffe können beispielsweise Klebstoffe verwendet werden, welche unter dem Handelsnamen SikaPower^{®} erhältlich sind.

In einer alternativen Ausführungsform umfasst der Klebstoff einen expandierbaren Klebstoff.

In einer beispielhaften Weiterbildung weist der Klebstoff eine Expansionsrate von weniger als 500%, bevorzugt von weniger als 400%, besonders bevorzugt von weniger als 300%, auf.

Als expandierbare Klebstoffe können beispielsweise Klebstoffe verwendet werden, welche unter dem Handelsnamen SikaReinforcer^{®} erhältlich sind.

In einer alternativen Ausführungsform ist der Klebstoff ein Formgedächtnisklebstoff. Formgedächtnisklebstoffe, wie sie beispielsweise in den Dokumenten WO 2011/117398 und WO 2011/117402 beschrieben sind, können beispielsweise auf den Träger bzw. das Verstärkungselement aufgebracht werden und dann in eine angespannte Form gebracht werden. In dieser angespannten Form wird der Träger und das Verstärkungselement mit dem Klebstoff in den Hohlraum gebracht. Durch eine Wärmeanwendung kann der Klebstoff wieder in seine ursprüngliche Form zurückgebracht werden, und dabei schliesst der Klebstoff eine Lücke zwischen Verstärkungsvorrichtung und Strukturelement.

Der Vorteil solcher Formgedächtnisklebstoffe ist es, dass dadurch ein Spalt zwischen Verstärkungsvorrichtung und Strukturelement besteht, um beispielsweise das Strukturelement zu lackieren, und dass gleichzeitig eine Verklebung mit sehr guten mechanischen Eigenschaften erzielt werden kann, weil der Formgedächtnisklebstoff nicht geschäumt werden muss.

In einer weiteren alternativen Ausführungsform ist der Klebstoff ein einspritzbarer Klebstoff. Ein System mit eingespritzten Klebstoffen ist beispielsweise in Dokument WO 2008/077944 dargestellt. Dabei wird zunächst die Verstärkungsvorrichtung im Strukturelement angeordnet, und dann wird der flüssige Klebstoff in den Zwischenraum zwischen Verstärkungsvorrichtung und Strukturelement eingebracht.

Dies hat den Vorteil, dass dabei sehr gute mechanische Eigenschaften der Klebstoffschicht erzielt werden können, weil der Klebstoff wiederum nicht geschäumt werden muss.

In einer weiteren alternativen Weiterbildung ist der Klebstoff ein aufextrudierter Klebstoff. Ein System mit einem solchen aufextrudierten Klebstoff ist beispielsweise in der WO 2014/124924 beschrieben.

Ein Vorteil von aufextrudierten Klebstoffen ist insbesondere, dass dadurch kein Spalt zwischen Verstärkungsvorrichtung und Strukturelement überwunden werden muss, und dass folglich keine Schäumung und dadurch mechanische Schwächung des Klebstoffes notwendig ist.

Als aufextrudierte Klebstoff können beispielsweise Klebstoffe verwendet werden, welche unter dem Handelsnamen SikaPower^{®} erhältlich sind.

In einer beispielhaften Ausführungsform umfasst der Klebstoff einen aushärtbaren Klebstoff.

Der Vorteil von aushärtbaren Klebstoffen besteht darin, dass dadurch Systeme mit verbesserten mechanischen Eigenschaften zur Verfügung gestellt werden können.

In einer beispielhaften Weiterbildung sind der erste Klebstoff und der zweite Klebstoff gleiche Klebstoffe.

In einer alternativen Weiterbildung sind der erste Klebstoff und der zweite Klebstoff unterschiedliche Klebstoffe. Beispielsweise kann der erste Klebstoff als eine andere Expansionsrate oder eine andere Zusammensetzung als der zweite Klebstoff aufweisen.

Ein dritter Klebstoff, sofern vorgesehen, kann wiederum gleich oder anders ausgebildet sein als der erste Klebstoff und der zweite Klebstoff.

In einer beispielhaften Ausführungsform beträgt eine Länge des Verstärkungselementes zwischen 50% und 200% einer Länge des Trägers, bevorzugt zwischen 70% und 150%, besonders bevorzugt zwischen 80% und 130%.

In einer beispielhaften Ausführungsform beträgt eine Breite des Verstärkungselementes zwischen 50% und 200% einer Breite des Trägers, bevorzugt zwischen 70% und 150%, besonders bevorzugt zwischen 80% und 130%.

Es hat sich gezeigt, dass Verstärkungselemente, welche ungefähr gleiche Abmessungen haben wie die erste bzw. die zweite Oberfläche des Trägers, besonders geeignet sind, um die hier vorgeschlagenen Verstärkungssysteme zu realisieren.

In einer beispielhaften Ausführungsform ist die Verstärkungsvorrichtung in einem Bereich eines Knotenpunktes einer Karosserie des Kraftfahrzeuges angeordnet. Insbesondere ist die Verstärkungsvorrichtung in Endbereichen der A-Säule, C-Säule oder D-Säule, sowie an Eckpunkten der Karosserie angeordnet.

Dies ist deshalb vorteilhaft, weil so Bereiche der Karosserie mit dem hier vorgeschlagenen System verstärkt werden können, welche besonders hohen Belastungen ausgesetzt sind, wie sie beispielsweise bei Unfällen auftreten.

Einzelheiten und Vorteile der Erfindung werden im Folgenden anhand von Ausführungsbeispielen und mit Bezug auf schematische Zeichnungen beschrieben.

Es zeigen:
- Fig. 1: eine beispielhafte Darstellung einer Karosserie eines Kraftfahrzeugs;
- Fig. 2a bis 4d: eine beispielhafte Darstellung einer Verstärkungsvorrichtung bzw. eines Systems eines verstärkten Strukturelements; und
- Fig. 5: eine beispielhafte Darstellung eines Trägers und eines Verstärkungselementes.

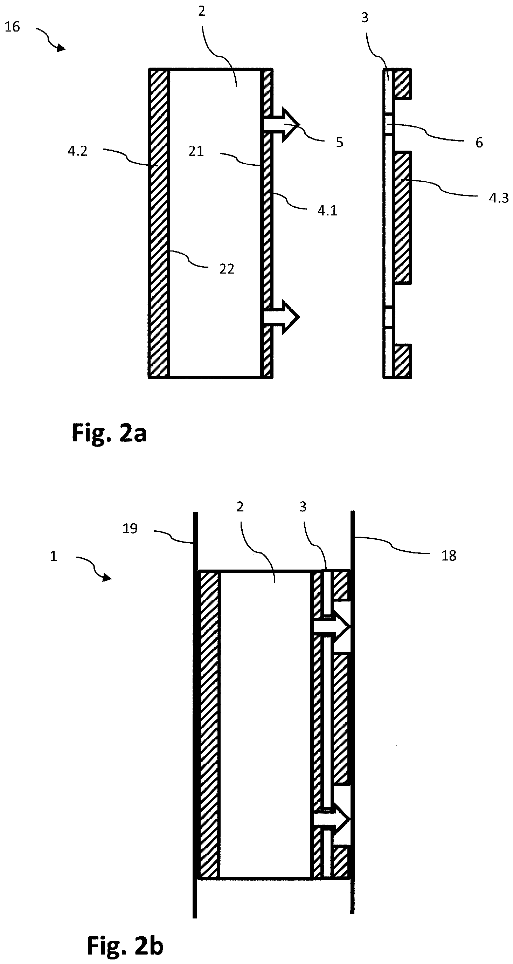

In den Fig. 2 bis 4 sind jeweils drei unterschiedliche Ausführungsformen einer Verstärkungsvorrichtung bzw. eines Systems eines verstärkten Strukturelements dargestellt. Dabei ist jeweils zunächst die Verstärkungsvorrichtung dargestellt, und sodann ist das System eines verstärkten Strukturelementes dargestellt, bei welchem die Verstärkungsvorrichtung in ihrer vorgesehenen Position im Strukturelement angeordnet ist.

Im Ausführungsbeispiel gemäss den Fig. 2a und 2b umfasst die Verstärkungsvorrichtung 16 einen Träger 2, ein Verstärkungselement 3 und Klebstoff 4. In diesem Ausführungsbeispiel ist ein erster Klebstoff 4.1 auf einer ersten Oberfläche 21 des Trägers 2 angeordnet. Ein zweiter Klebstoff 4.2 ist auf einer zweiten Oberfläche 22 des Trägers 2 angeordnet. Ein dritter Klebstoff 4.3 ist auf dem Verstärkungselement 3 angeordnet. Dabei können der erste Klebstoff 4.1, der zweite Klebstoff 4.2 und der dritte Klebstoff 4.3 gleiche oder aber auch unterschiedliche Klebstoffe sein.

In diesem Ausführungsbeispiel hat der Träger 2 erste Verbindungselemente 5, und das Verstärkungselement 3 hat zweite Verbindungselemente 6. In diesem Ausführungsbeispiel sind die ersten Verbindungselemente 5 als Clips ausgebildet, und die zweiten Verbindungselemente 6 sind als entsprechende Gegenstücke ausgebildet. Dadurch können der Träger 2 und das Verstärkungselement 3 vorfixiert werden, bevor der Träger 2 und das Verstärkungselement 3 in das Strukturelement eingeführt werden. Dies erleichtert eine Handhabung des Systems wesentlich.

In Fig. 2b ist nun ein System 1 eines verstärkten Strukturelementes dargestellt, wobei die in Fig. 2a dargestellte Verstärkungsvorrichtung 16 zwischen einer ersten Wand 18 des Strukturelementes und einer zweiten Wand 19 des Strukturelementes angeordnet ist.

In diesem Ausführungsbeispiel gemäss den Fig. 2a und 2b ist der Klebstoff 4 als nicht expandierbarer Klebstoff ausgebildet. Beispielsweise kann der Klebstoff 4 als aushärtbarer Klebstoff ausgebildet sein, so dass die Verstärkungsvorrichtung 16 zunächst vorfixiert und im Strukturelement angeordnet werden kann, und danach der Klebstoff 4, beispielsweise durch eine Hitzeanwendung, ausgehärtet werden kann, um die Elemente sicher miteinander zu verbinden.

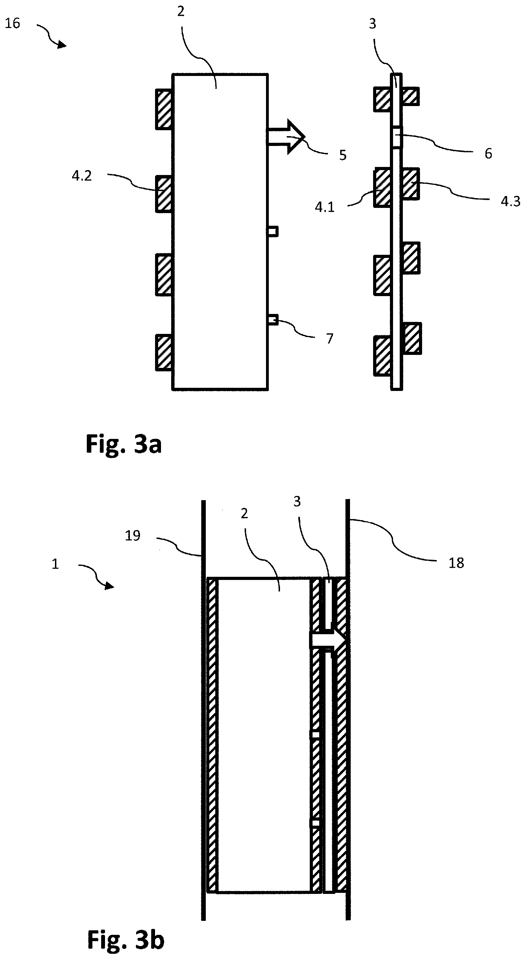

In den Fig. 3a und 3b ist ein anderes Ausführungsbeispiel einer Verstärkungsvorrichtung 16 bzw. eines Systems 1 eines verstärkten Strukturelementes mit einer solchen Verstärkungsvorrichtung 16 dargestellt. In diesem Ausführungsbeispiel ist der Klebstoff 4 nicht flächig auf dem Träger 2 bzw. auf dem Verstärkungselement 3 angeordnet, sondern in Form von Klebstoffraupen. Diese Klebstoffraupen werden beim Zusammenfügen der Elemente verformt, so dass am Ende wiederum eine flächige Verteilung des Klebstoffes 4 zwischen den Elementen resultiert. Auch in diesem Ausführungsbeispiel ist der Klebstoff 4 als nicht expandierbarer Klebstoff ausgebildet.

In diesem Ausführungsbeispiel gemäss den Fig. 3a und 3b hat der Träger 2 neben dem ersten Verbindungselement 5 noch zwei Distanzhalter 7. Wie in Fig. 3b ersichtlich, definieren diese Distanzhalter 7 eine relative Position des Verstärkungselementes 3 zum Träger 2.

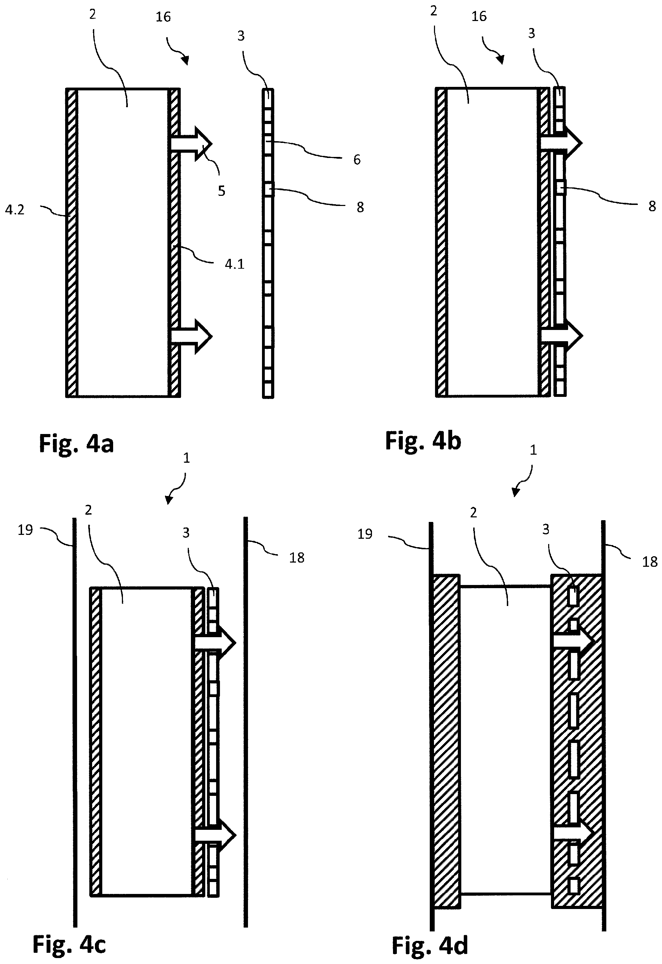

In den Fig. 4a bis 4d ist ein weiteres Ausführungsbeispiel einer Verstärkungsvorrichtung 16 bzw. eines Systems 1 mit einer solchen Verstärkungsvorrichtung in einem Strukturelement dargestellt. Dabei zeigt die Fig. 4a den Träger 2 und das Verstärkungselement 3 separat, die Fig. 4b zeigt den Träger 2 mit dem Verstärkungselement 3 in einem vorfixierten Zustand, die Fig. 4c zeigt ein System 1, in dem die vorfixierte Verstärkungsvorrichtung 16 (bestehend aus Träger 2, Verstärkungselement 3 und Klebstoff 4) im Strukturelement angeordnet ist, und die Fig. 4d zeigt ein System 1, in dem die Verstärkungsvorrichtung 16 durch den Klebstoff 4 mit dem Strukturelement, bzw. mit dessen Wänden 18, 19, verbunden ist.

In diesem Ausführungsbeispiel ist zunächst auf dem Verstärkungselement 3 kein Klebstoff 4 angeordnet. Das Verstärkungselement 3 hat jedoch Aussparungen 8, durch welche der Klebstoff 4 fliessen kann. In diesem Ausführungsbeispiel ist der Klebstoff 4 als expandierbarer Klebstoff ausgebildet. In den Fig. 4a bis 4c ist der Klebstoff in einem Zustand vor einer Expansion dargestellt, und in Fig. 4d ist der Klebstoff in einem Zustand nach einer Expansion dargestellt. Die Expansion des Klebstoffs kann beispielsweise durch eine Hitzeanwendung induziert werden. Beispielhafte hitzeexpandierbare Klebstoffe sind unter dem Handelsnamen SikaReinforcer^{®} erhältlich.

In diesem Ausführungsbeispiel wird demnach zunächst die in Fig. 4b gezeigte Verstärkungsvorrichtung 16 in das Strukturelement eingebracht, bevor der Klebstoff 4 expandiert, wie dies in Fig. 4c dargestellt ist. Nach der Positionierung der Verstärkungsvorrichtung 16 im Strukturelement wird der Klebstoff 4 expandiert, wobei der erste Klebstoff 4.1, welcher zunächst auf der ersten Oberfläche des Trägers 2 angeordnet war, durch die Aussparungen 8 des Verstärkungselementes 3 hindurchfliesst und dadurch sowohl den Träger 2 mit dem Verstärkungselement 3 verbindet, als auch den Träger 2 und das Verstärkungselement 3 mit dem Strukturelement bzw. dessen Wänden 18, 19. In diesem Ausführungsbeispiel gemäss den Fig. 4a bis 4d kann demnach ein Verstärkungselement 3 ohne darauf angeordneten Klebstoff 4 verwendet werden.

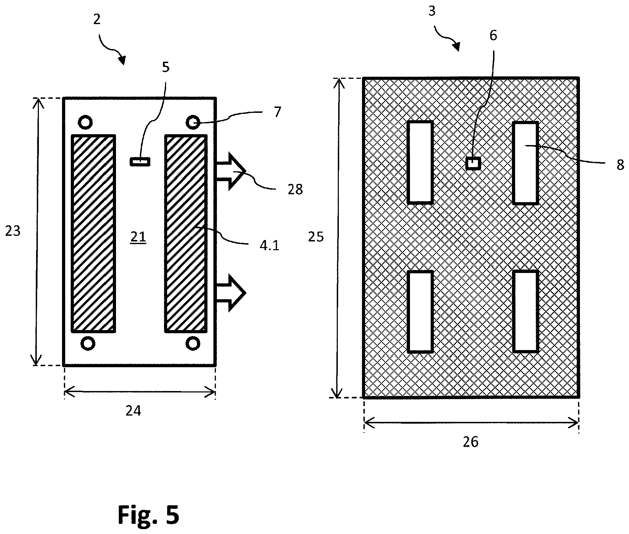

In Fig. 5 ist ein beispielhafter Träger 2 und ein beispielhaftes Verstärkungselement 3 in Draufsicht dargestellt. Auf dieser Darstellung ist die erste Oberfläche 21 des Trägers 2 ersichtlich. Auf dieser ersten Oberfläche 21 des Trägers 2 ist ein erstes Verbindungselement 5 angeordnet, mehrere Distanzhalter 7 sowie der erste Klebstoff 4.1. Zudem sind am Träger 2 Befestigungselemente 28 angeordnet, mithilfe derer der Träger 2 im Strukturelement vorfixiert werden kann, bevor der Klebstoff 4 den Träger 2 und das Verstärkungselement 3 mit dem Strukturelement verbindet.

Das Verstärkungselement 3 hat ein zweites Verbindungselement 6 zur Verbindung mit dem ersten Verbindungselement 5 des Trägers 2. Zudem weist das Verstärkungselement 3 Aussparungen 8 auf, durch welche der Klebstoff 4 hindurchfliessen kann.

In Fig. 5 sind zudem jeweils eine Länge 23 des Trägers 2, eine Länge 25 des Verstärkungselementes 3, eine Breite 24 des Trägers 2 und eine Breite 26 des Verstärkungselementes 3 dargestellt.

### Bezugszeichenliste

- 1: System
- 2: Träger
- 3: Verstärkungselement
- 4: Klebstoff
- 4.1: erster Klebstoff
- 4.2: zweiter Klebstoff
- 4.3: dritter Klebstoff
- 5: erstes Verbindungselement
- 6: zweites Verbindungselement
- 7: Distanzhalter
- 8: Aussparung
- 10: Karosserie
- 11: A-Säule
- 12: B-Säule
- 13: C-Säule
- 14: Dachrahmen
- 16: Verstärkungsvorrichtung
- 18: erste Wand
- 19: zweite Wand
- 21: erste Oberfläche
- 22: zweite Oberfläche
- 23: Länge des Trägers
- 24: Breite des Trägers
- 25: Länge des Verstärkungselementes
- 26: Breite des Verstärkungselementes
- 28: Befestigungselement

## Patentansprüche

1. Verstärkungsvorrichtung (16) zur Verstärkung eines Strukturelementes in einem Kraftfahrzeug, die Verstärkungsvorrichtung (16) umfassend:
einen Träger (2) mit einer ersten Oberfläche (21) zur Ausrichtung gegen eine erste Wand (18) des Strukturelementes und einer zweiten Oberfläche (22) zur Ausrichtung gegen eine zweite Wand (19) des Strukturelementes;
ein Verstärkungselement (3) zur Anordnung zwischen dem Träger (2) und der ersten Wand (18) des Strukturelementes; und
einen Klebstoff (4) zur Verbindung des Trägers (2) mit dem Verstärkungselement (3) und zur Verbindung des Trägers (2) und des Verstärkungselementes (3) mit dem Strukturelement
wobei der Träger (2) ein erstes Verbindungselement (5) hat und das Verstärkungselement (3) ein zweites Verbindungselement (6) hat, wobei der Träger (2) und das Verstärkungselement (3) durch die Verbindungselemente (5, 6) mechanisch miteinander verbindbar sind,
**dadurch gekennzeichnet, dass** das Verstärkungselement (3) zumindest eine Aussparung (8) hat, welche zwischen 10% und 50% einer Gesamtfläche des Verstärkungselementes beträgt, sodass der Klebstoff (4), welcher zwischen Träger (2) und Verstärkungselement (3) angeordnet ist, durch eine Fliessbewegung und/oder eine Ausdehnungsbewegung sowohl den Träger (2) mit dem Verstärkungselement (3) verbinden kann, als auch den Träger (2) und das Verstärkungselement (3) mit einer Wand (18) des Strukturelementes.

2. Verstärkungsvorrichtung (16) nach Anspruch 1, wobei ein erster Klebstoff (4.1) auf der ersten Oberfläche (21) des Trägers (2) und/oder auf dem Verstärkungselement (3) angeordnet ist, und wobei ein zweiter Klebstoff (4.2) auf der zweiten Oberfläche (22) des Trägers (2) angeordnet ist.

3. Verstärkungsvorrichtung (16) nach einem der Ansprüche 1 oder 2, wobei ein dritter Klebstoff (4.3) auf dem Verstärkungselement (3) angeordnet ist.

4. Verstärkungsvorrichtung (16) nach einem der vorhergehenden Ansprüche, wobei das Verstärkungselement (3) Metall, Kunststoff, faserverstärkten Kunststoff oder Kombinationen davon umfasst, und/oder wobei der Träger (2) Kunststoff oder faserverstärkten Kunststoff umfasst, und/oder wobei der Träger (2) Rippen zur Verstärkung hat.

5. Verstärkungsvorrichtung (16) nach einem der vorhergehenden Ansprüche, wobei der Klebstoff (4) einen nicht expandierbaren oder einen expandierbaren Klebstoff (4) umfasst und/oder
wobei der Klebstoff (4) einen aushärtbaren Klebstoff (4) umfasst.

6. Verstärkungsvorrichtung (16) nach einem der vorhergehenden Ansprüche, wobei eine Länge (25) des Verstärkungselementes (3) zwischen 50% und 200% einer Länge (23) des Trägers (2) beträgt, und/oder wobei eine Breite (26) des Verstärkungselementes (3) zwischen 50% und 200% einer Breite (24) des Trägers (2) beträgt.

7. System (1) eines verstärkten Strukturelementes in einem Kraftfahrzeug, das System (1) umfassend:
ein Strukturelement mit zumindest einer ersten Wand (18) und einer zweiten Wand (19);
eine im Strukturelement angeordnete Verstärkungsvorrichtung (16) nach einem der Ansprüche 1 bis 6, wobei der Klebstoff (4) den Träger (2) mit dem Verstärkungselement (3) verbindet, und den Träger (2) und das Verstärkungselement (3) mit dem Strukturelement verbindet.

8. System (1) nach Anspruch 7, wobei die Verstärkungsvorrichtung (16) in einem Bereich eines Knotenpunktes einer Karosserie (10) des Kraftfahrzeuges angeordnet ist.

9. Verfahren zur Verstärkung eines Strukturelementes in einem Kraftfahrzeug, das Verfahren umfassend die Schritte:
Bereitstellen eines Trägers (2) nach einem der Ansprüche 1 bis 6;
Bereitstellen eines Verstärkungselementes (3) nach einem der Ansprüche 1 bis 6;
Vorfixieren des Trägers (2) mit dem Verstärkungselement (3), bevor Träger (2) und Verstärkungselement (3) im Strukturelement angeordnet werden, wobei der Träger (2) ein erstes Verbindungselement (5) hat und das Verstärkungselement (3) ein zweites Verbindungselement (6) hat, wobei der Träger (2) und das Verstärkungselement (3) durch die Verbindungselemente (5, 6) mechanisch miteinander verbunden werden;
Anordnen des Trägers (2) und des Verstärkungselementes (3) im Strukturelement, so dass die erste Oberfläche (21) gegen eine erste Wand (18) des Strukturelementes gerichtet ist und die zweite Oberfläche (22) gegen eine zweite Wand (19) des Strukturelementes gerichtet ist, und so dass das Verstärkungselement (3) zwischen dem Träger (2) und der ersten Wand (18) des Strukturelementes angeordnet ist; und
Verbinden des Trägers (2) mit dem Verstärkungselement (3) sowie des Trägers (2) und des Verstärkungselementes (3) mit dem Strukturelement mit Klebstoff (4).

10. Verfahren nach Anspruch 9, umfassend den zusätzlichen Schritt: Expandieren des Klebstoffes (4) und/oder
Aushärten des Klebstoffes (4).

## Claims

1. Reinforcing device (16) for reinforcing a structural element in a motor vehicle, the reinforcing device (16) comprising:
a carrier (2) having a first surface (21) for orientation towards a first wall (18) of the structural element and having a second surface (22) for orientation towards a second wall (19) of the structural element;
a reinforcing element (3) for arrangement between the carrier (2) and the first wall (18) of the structural element; and
an adhesive (4) for connecting the carrier (2) to the reinforcing element (3) and for connecting the carrier (2) and the reinforcing element (3) to the structural element,
wherein the carrier (2) has a first connecting element (5) and the reinforcing element (3) has a second connecting element (6), wherein the carrier (2) and the reinforcing element (3) are mechanically connectable to one another by way of the connecting elements (5, 6),
**characterized in that** the reinforcing element (3) has at least one cutout (8), which makes up between 10% and 50% of a total surface area of the reinforcing element, so that the adhesive (4) arranged between carrier (2) and reinforcing element (3) can both connect the carrier (2) to the reinforcing element (3) and connect the carrier (2) and the reinforcing element (3) to a wall (18) of the structural element by way of a flow movement and/or an expansion movement.

2. Reinforcing device (16) according to Claim 1, wherein a first adhesive (4.1) is arranged on the first surface (21) of the carrier (2) and/or on the reinforcing element (3), and wherein a second adhesive (4.2) is arranged on the second surface (22) of the carrier (2).

3. Reinforcing device (16) according to either of Claims 1 and 2, wherein a third adhesive (4.3) is arranged on the reinforcing element (3).

4. Reinforcing device (16) according to one of the preceding claims, wherein the reinforcing element (3) comprises metal, plastic, fibre-reinforced plastic or combinations thereof, and/or wherein the carrier (2) comprises plastic or fibre-reinforced plastic, and/or wherein the carrier (2) has ribs for reinforcement.

5. Reinforcing device (16) according to one of the preceding claims, wherein the adhesive (4) comprises a non-expandable or an expandable adhesive (4), and/or wherein the adhesive (4) comprises a curable adhesive (4) .

6. Reinforcing device (16) according to one of the preceding claims, wherein a length (25) of the reinforcing element (3) is between 50% and 200% of a length (23) of the carrier (2), and/or wherein a width (26) of the reinforcing element (3) is between 50% and 200% of a width (24) of the carrier (2).

7. System (1) of a reinforced structural element in a motor vehicle, the system (1) comprising:
a structural element having at least one first wall (18) and one second wall (19);
a reinforcing device (16) according to one of Claims 1 to 6 that is arranged in the structural element, wherein the adhesive (4) connects the carrier (2) to the reinforcing element (3) and connects the carrier (2) and the reinforcing element (3) to the structural element.

8. System according to Claim 7, wherein the reinforcing device (16) is arranged in the region of a junction of a body (10) of the motor vehicle.

9. Method for reinforcing a structural element in a motor vehicle, the method comprising the steps of:
providing a carrier (2) according to one of Claims 1 to 6;
providing a reinforcing element (3) according to one of Claims 1 to 6;
pre-fixing the carrier (2) to the reinforcing element (3) before carrier (2) and reinforcing element (3) are arranged in the structural element, wherein the carrier (2) has a first connecting element (5) and the reinforcing element (3) has a second connecting element (6), wherein the carrier (2) and the reinforcing element (3) are mechanically connected to one another by way of the connecting elements (5, 6);
arranging the carrier (2) and the reinforcing element (3) in the structural element so that the first surface (21) is directed towards a first wall (18) of the structural element and the second surface (22) is directed towards a second wall (19) of the structural element, and so that the reinforcing element (3) is arranged between the carrier (2) and the first wall (18) of the structural element; and
connecting the carrier (2) to the reinforcing element (3), and the carrier (2) and the reinforcing element (3) to the structural element, using adhesive (4) .

10. Method according to Claim 9, comprising the additional step of:
expanding the adhesive (4) and/or curing the adhesive (4).

## Revendications

1. Dispositif de renforcement (16) pour renforcer un élément de structure dans un véhicule automobile, le dispositif de renforcement (16) comprenant :
un support (2) avec une première surface (21) destinée à être alignée contre une première paroi (18) de l'élément de structure et une deuxième surface (22) destinée à être alignée contre une deuxième paroi (19) de l'élément de structure ;
un élément de renforcement (3) destiné à être agencé entre le support (2) et la première paroi (18) de l'élément de structure ; et
un adhésif (4) destiné à relier le support (2) à l'élément de renforcement (3) et à relier le support (2) et l'élément de renforcement (3) à l'élément de structure,
le support (2) ayant un premier élément de liaison (5) et l'élément de renforcement (3) ayant un deuxième élément de liaison (6), le support (2) et l'élément de renforcement (3) pouvant être reliés mécaniquement l'un à l'autre par les éléments de liaison (5, 6),
**caractérisé en ce que** l'élément de renforcement (3) a au moins un évidement (8), qui représente entre 10 % et 50 % d'une surface totale de l'élément de renforcement, de telle sorte que l'adhésif (4), qui est agencée entre le support (2) et l'élément de renforcement (3), peut, par un mouvement d'écoulement et/ou un mouvement d'expansion, relier aussi bien le support (2) à l'élément de renforcement (3) que le support (2) et l'élément de renforcement (3) à une paroi (18) de l'élément de structure.

2. Dispositif de renforcement (16) selon la revendication 1, dans lequel un premier adhésif (4.1) est agencé sur la première surface (21) du support (2) et/ou sur l'élément de renforcement (3), et dans lequel un deuxième adhésif (4.2) est agencé sur la deuxième surface (22) du support (2).

3. Dispositif de renforcement (16) selon l'une quelconque des revendications 1 ou 2, dans lequel un troisième adhésif (4.3) est agencé sur l'élément de renforcement (3).

4. Dispositif de renforcement (16) selon l'une quelconque des revendications précédentes, dans lequel l'élément de renforcement (3) comprend du métal, du plastique, du plastique renforcé par des fibres ou des combinaisons de ceux-ci, et/ou dans lequel le support (2) comprend du plastique ou du plastique renforcé par des fibres, et/ou dans lequel le support (2) a des nervures pour le renforcement.

5. Dispositif de renforcement (16) selon l'une quelconque des revendications précédentes, dans lequel l'adhésif (4) comprend un adhésif non expansible ou un adhésif expansible (4) et/ou
dans lequel l'adhésif (4) comprend un adhésif durcissable (4) .

6. Dispositif de renforcement (16) selon l'une quelconque des revendications précédentes, dans lequel une longueur (25) de l'élément de renforcement (3) est comprise entre 50 % et 200 % d'une longueur (23) du support (2), et/ou dans lequel une largeur (26) de l'élément de renforcement (3) est comprise entre 50 % et 200 % d'une largeur (24) du support (2).

7. Système (1) d'un élément de structure renforcé dans un véhicule automobile, le système (1) comprenant :
un élément de structure avec au moins une première paroi (18) et une deuxième paroi (19) ;
un dispositif de renforcement (16) selon l'une quelconque des revendications 1 à 6, agencé dans l'élément de structure, dans lequel l'adhésif (4) relie le support (2) à l'élément de renforcement (3), et relie le support (2) et l'élément de renforcement (3) à l'élément de structure.

8. Système (1) selon la revendication 7, dans lequel le dispositif de renforcement (16) est agencé dans une zone d'un point de jonction d'une carrosserie (10) du véhicule automobile.

9. Procédé de renforcement d'un élément de structure dans un véhicule automobile, le procédé comprenant les étapes suivantes :
la fourniture d'un support (2) selon l'une quelconque des revendications 1 à 6 ;
la fourniture d'un élément de renforcement (3) selon l'une quelconque des revendications 1 à 6 ;
la fixation préliminaire du support (2) à l'élément de renforcement (3) avant d'agencer le support (2) et l'élément de renforcement (3) dans l'élément de structure, le support (2) ayant un premier élément de liaison (5) et l'élément de renforcement (3) ayant un deuxième élément de liaison (6), le support (2) et l'élément de renforcement (3) étant reliés mécaniquement l'un à l'autre par les éléments de liaison (5, 6) ;
l'agencement du support (2) et de l'élément de renforcement (3) dans l'élément de structure de telle sorte que la première surface (21) soit alignée contre une première paroi (18) de l'élément de structure et que la deuxième surface (22) soit alignée contre une deuxième paroi (19) de l'élément de structure, et de telle sorte que l'élément de renforcement (3) soit agencé entre le support (2) et la première paroi (18) de l'élément de structure ; et
la liaison du support (2) à l'élément de renforcement (3) ainsi que du support (2) et de l'élément de renforcement (3) à l'élément de structure avec un adhésif (4).

10. Procédé selon la revendication 9, comprenant l'étape supplémentaire suivante :
l'expansion de l'adhésif (4) et/ou
le durcissement de l'adhésif (4).
